# EUROPÄISCHE PATENTANMELDUNG

(11) **EP 1 294 075 A1**
(43) Veröffentlichungstag der Anmeldung: **19.03.2003**
(21) Anmeldenummer: 02018762.1
(22) Anmeldetag: 22.08.2002
(51) Int. Cl.: H02K 1/27

(54) **Rotor für eine Synchronmaschine mit transversaler Flussführung und Verfahren zur Verbesserung des Korrosionsschutzes**

(30) Priorität: 17.09.2001 DE 10145820
(71) Anmelder: Voith Turbo GmbH, 89522 Heidenheim (DE)
(72) Erfinder: Angerer, Wolfram, 89518 Heidenheim (DE); Lange, Andreas, Dr., 89551 Zang (DE); Mühlberger, Uwe, 89522 Heidenheim (DE)
(74) Vertreter: Sawodny, Michael-Wolfgang

(57) **Zusammenfassung**

Die Erfindung betrifft einen Rotor für eine Synchronmaschine mit transversaler Flußführung, insbesondere einer Transversalflußmaschine,
- mit einer Trägerscheibe;
- mit wenigstens einer, von der Trägerscheibe in axialer Richtung sich weg erstreckenden Polstruktur umfassend wenigstens zwei nebeneinanderliegende, durch eine Zwischenlage aus magnetisch und elektrisch nicht leitendem Material getrennte Reihen aus in Umfangsrichtung wechselweise magnetisierten Magnetanordnungen mit dazwischenliegenden Sammler- beziehungsweise Weicheisenelementen;
- die Magnetanordnungen sind in Umfangsrichtung formschlüssig mit den benachbarten Sammler- beziehungsweise Weicheisenelementen verbunden;
- die einzelnen Reihen von in Umfangsrichtung wechselweise magnetisierten Permanent-Magnetanordnungen mit dazwischenliegenden Weicheisenelementen und die dazwischenliegenden Zwischenlagen und die Trägerscheibe sind kraftschlüssig miteinander gekoppelt.

Die Erfindung ist gekennzeichnet durch die folgenden Merkmale:
- im montierten Zustand sind zwischen den Magnetanordnungen und den benachbarten Sammler- beziehungsweise Weicheisenelementen in axialer und radialer Richtung jeweils ein Fügespalt geringer Größe vorgesehen;
- die Magnetanordnungen sind in axialer und/oder radialer Richtung zusätzlich stoffschlüssig mit den benachbarten Sammler- beziehungsweise Weicheisenelementen in Umfangsrichtung verbunden;
- der Stoffschluß wird durch wenigstens in den Fügespalt eingebrachtes Tränkharz realisiert.

## Beschreibung

Die Erfindung betrifft einen Rotor für eine Synchronmaschine mit transversaler Flußführung, im einzelnen mit den Merkmalen aus dem Oberbegriff des Anspruchs 1; ferner ein Verfahren zur Verbesserung des Korrosionsschutzes von Permanent-Magnetanordnungen von Rotoren für Synchronmaschinen mit transversaler Flußführung.

Rotoren für Synchronmaschinen mit transversaler Flußführung sind in unterschiedlichen Ausführungen bekannt. Diese umfassen im allgemeinen eine oder mehrere axial aneinandergereihte, durch dazwischenliegende Kunststoff - oder aus anderem elektrischen nicht leitfähigen Material - ausgeführte Reihen und/oder durch eine Rotorscheibe voneinander getrennte, konzentrische Ringe, in denen am Umfang wechselweise sogenannte Sammler- bzw. Weicheisenelemente und Permanent-Magnetanordnungen angeordnet sind. Diese konzentrische Ringe werden auch als Polstrukturen bezeichnet. Die Festigkeit der Rotorstruktur wird dabei in der Regel durch Kleben erreicht, wobei diese Verbindung mit einfachen konstruktiven Elementen, wie beispielsweise Bolzen, Schrauben, Nieten usw. eine zusätzliche Absicherung erfährt. Eine derartige Ausführung ist beispielsweise aus der Druckschrift DE 43 30 272 A1 bekannt. Zur Befestigung werden Befestigungselemente verwendet, welche durch die polarisierten Magnetanordnungen hindurchgehen und an der Trägerscheibe bzw. an einem axial beabstandeten, mit der Rotorscheibe verbundenem Isolierringelement befestigt sind. Entsprechend der Polpaarzahl sind vier Mal mehr Innen- und Außenmagnete vorzusehen, welche miteinander verklebt und verschraubt werden. Die während des Betriebes auftretenden Kräfte werden stoff- und kraftschlüssig übertragen. Da der Klebstoff hierbei als Konstruktionselement zum Einsatz gelangt, werden an die Verarbeitung hohe Ansprüche bezüglich Sauberkeit gesetzt. Die Herstellung derartiger Rotoren ist dabei sehr kostenintensiv. Demgegenüber verzichtet eine Rotorausführung gemäß der Druckschrift DE 196 10 754 C1 auf stofflüssige Verbindungen zur Übertragung von Kräften und stützt die auftretenden Fliehkräfte formschlüssig ab. Dazu umfaßt der Rotor mindestens eine Polstruktur, vorzugsweise zweiphasige Maschinen zwei Polstrukturen, welche an den Stirnseiten einer zentralen Trägerscheibe koaxial zur Rotationsachse und sich in radialer Richtung erstreckend angeordnet sind. Jede Polstruktur umfaßt zwei nebeneinanderliegende, durch eine Zwischenlage aus elektrisch nicht leitendem Material getrennte Reihen aus in Umfangsrichtung wechselweise magnetisierten Magnetanordnungen mit dazwischenliegenden Sammler- bzw. Weicheisenelementen. Vorzugsweise ist jeder Polstruktur des weiteren ein Endring zugeordnet. Die einer Magnetanordnung in Umfangsrichtung benachbarten Sammler- bzw. Weicheisenelemente sind derart gestaltet, daß diese einen ersten innen liegenden Anschlag und einen zweiten außen liegenden Anschlag für die Magnetanordnung in radialer Richtung bilden. Der Formschluß der einzelnen Magnetanordnungen und Sammler- bzw. Weicheisenelemente wird in radialer Richtung dadurch hergestellt, daß in bestimmten Abständen in Umfangsrichtung den Reihen aus in Umfangsrichtung wechselweise magnetisierten Magnetanordnungen mit dazwischenliegenden Sammler- bzw. Weicheisenelementen in axialer Richtung beidseitig überstehende Elemente zugeordnet sind, wobei wenigstens ein Teil der überstehenden Bereiche von dazu komplementären Nuten an den diesen Reihen benachbarten Elementen aufnehmbar sind. Dabei sind die überstehenden Elemente vorzugsweise im Bereich der Magnetanordnung vorgesehen und werden von Elementen mit geeigneter Formgebung, beispielsweise plattenförmigen Elementen gebildet. Zwischen den in axialer Richtung einer Reihe aus in Umfangsrichtung wechselweise magnetisierten Permanent-Magnetanordnungen mit dazwischenliegenden Sammler- bzw. Weicheisenelementen benachbarten Ringen, insbesondere zwischen der zentralen Trägerscheibe und dem Zwischenring bzw. dem Zwischenring und dem Endring ist zu diesem Zweck wenigstens ein mit amagnetischen Eigenschaften ausgestattetes Zwischenelement vorgesehen, welches in dazu komplementären Nuten an den der Reihe aus in Umfangsrichtung wechselweise magnetisierten Magnetanordnungen mit dazwischenliegenden Sammler- bzw. Weicheisenelementen benachbarten Elementen einsetzbar ist. Bei den aus Permanent-Magnetanordnungen und Sammler- bzw. Weicheisenelementen bestehenden Reihen sind die zwischen zwei Sammler- bzw. Weicheisenelementen in Umfangsrichtung angeordneten Permanent-Magnetanordnungen dazu zweiteilig ausgeführt bzw. umfassen einen Innen- und einen Außenmagneten. Der Formschluß wird mittels Elementen mit geeigneter Formgebung realisiert, die zwischen den Innen- und Außenmagneten in den aus Magnetanordnungen und Sammler- bzw. Weicheisenelementen bestehenden Ringen angeordnet sind, und sich über die Ausdehnung der Permanent-Magnetanordnungen in axialer Richtung erstrecken und den komplementären Nuten an den aus nicht leitfähigem Material bestehenden Elementen der Polkörperstruktur zugeordnet sind. Mit dieser Rotorausführung wird vollständig auf eine stofflüssige Klebeverbindung verzichtet. Ein Nachteil dieser Ausführung besteht jedoch darin, daß zur Vermeidung von Beschädigungen der einzelnen miteinander in Wirkverbindung tretenden Elementen sehr hohe Anforderungen an die Toleranzen gestellt werden, da ansonsten aufgrund der Fliehkraftwirkung einseitige Belastungen an einzelnen Elementen auftreten können, welche bei längerer Betriebsdauer zu Schädigungen führen können. Zur Erleichterung der Montage wird daher ein Fügespalt von einigen Zehntel Millimetern in radialer und axialer Richtung zwischen den Permanent-Magnetanordnungen und den anderen Elementen - Weicheisenelementen in Umfangsrichtung bzw. in axialer Richtung dem Endring und dem Zwischenring bzw. der Trägerscheibe - vorgesehen. Auch wenn dieser Fügespalt sehr gering ist, sind Lageverschiebungen in radialer Richtung nicht auszuschließen, welche während des Betriebes zu ungleichmäßigen Belastungen und Beeinträchtigungen der elektromagnetischen Eigenschaften führen.

Der Erfindung liegt daher die Aufgabe zugrunde, einen Rotor für eine Synchronmaschine mit transversaler Flußführung zu entwickeln, welcher hinsichtlich seiner Fertigung und Montage durch einen geringen Aufwand charakterisiert ist und eine hohe mechanische Festigkeit ohne Beeinträchtigung der elektromagnetischen Eigenschaften aufweist.

Die erfindungsgemäße Lösung ist durch die Merkmale des Anspruchs 1 charakterisiert. Vorteilhafte Ausgestaltungen sind in den Unteransprüchen wiedergegeben.

Erfindungsgemäß werden die Rotoren der eingangs genannten Art mit kraft- und/oder formschlüssiger Lagefixierung der Magnetanordnungen zu den benachbarten Elementen, -Weicheisenelemente, Zwischenlage e.t.c. unter Beibehaltung von Fügespalten zwischen den einzelnen Elementen der Polstruktur mit Tränkharz, umfassend mindestens ein Alkydharz oder ein Phenolharz oder ein Esterimid, getränkt. Dadurch wird es möglich, Lufteinschlüsse im Inneren des Rotors auszufüllen und gleichzeitig aufgrund der Eigenschaften des Harzes eine entsprechende Beschichtung der einzelnen Elemente vorzunehmen, die einen Korrosionsschutz gewährleisten. Dabei werden durch die Tränkung in einem Arbeitsgang alle Magnetanordnungen fixiert, d.h. das separate Verkleben einzelner Magnetanordnungen entfällt.

Die Fügespalte sind dabei in radialer Richtung und/oder axialer und/oder Umfansgrichtung zwischen den Magnetanordnungen und den benachbarten Elementen vorgesehen. Vorzugsweise in allen drei Richtungen, wobei sich die Fügespalte über jeweils einen Teil der Erstreckung der Magnetanordnung in dieser Richtung mit erstrecken.

Insbesondere bei Verwendung von Neodym-Eisen-Bor-Magneten, welche sehr stark korrosionsgefährdet sind, kann mittels dieser Lösung ein sehr einfacher Korrosionsschutz geschaffen werden. Da der Korrosionsschutz durch die Tränkung, insbesondere das Tränkharz, realisiert wird, können auch Permanent-Magnetanordnungen zum Einsatz gelangen, denen im Normalfall ein zusätzlicher Korrosionsschutz zugeordnet werden müßte, weshalb mit der erfindungsgemäßen Lösung auch preiswertere Magnetan-ordnungen verwendet werden können.

Das erfindungsgemäße Verfahren zur Herstellung eines Rotors ist dadurch charakterisiert, daß zuerst die mechanischen Verbindungen, d.h. der Form- und Kraftschluß geschaffen werden und somit eine Rotorgrundeinheit gebildet wird, welche durch Fügespalte geringer Größe zwischen den einzelnen Elementen charakterisiert ist und der in einem weiteren zweiten Abschnitt eine Tränkung erfährt, wobei nahezu gleichzeitig ein Stoffschluß zwischen den einzelnen Elementen, zwischen denen Lufteinschlüsse aufgrund der Fügespalte vorhanden sind, vorgenommen wird.

Die erfindungsgemäße Lösung wird nachfolgend anhand von Figuren erläutert.

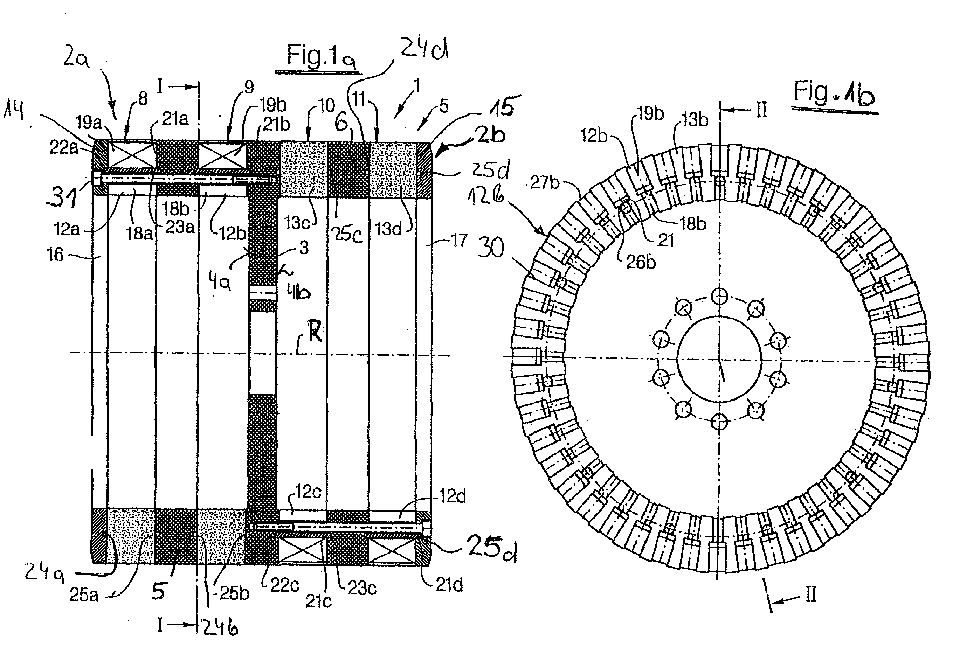

Figur 1a verdeutlicht anhand eines Ausschnittes aus einem Axialschnitt einen erfindungsgemäß gestalteten Rotor 1 für den Einsatz in Synchronmaschineen mit transversaler Flußführung, welche auch als Transversalflußmaschinen bezeichnet werden. Der Rotor 1 umfaßt dazu entsprechend der gewünschten Anzahl der zu realisierender Phasen mindestens eine Polstruktur 2, im dargestellten Fall für einen Rotor 1 für eine zweiphasige Synchronmaschine mit transversaler Flußführung, die beiden Polstrukturen 2a und 2b, die an einer zentralen Trägerscheibe 3, insbesondere deren Stirnflächen 4a und 4b, angeordnet sind und sich von diesen in axialer Richtung weg erstrecken. Die Polstrukturen 2a und 2b sind ringförmig ausgeführt und koaxial zur Rotationsachse R des Rotors angeordnet. Jede Polstruktur, hier 2a und 2b, umfaßt jeweils zwei nebeneinander liegende, durch eine Zwischenlage 5 für die Polstruktur 2a und 6 für die Polstruktur 2b aus magnetisch und elektrisch nicht leitfähigem Material getrennte Reihen 8 und 9 für die Polstruktur 2a und 10 und 11 für die Polstruktur 2b aus in Umfangsrichtung wechselweise magnetisierten Permanent-Magnetanordnungen 12, hier 12a für die Reihe 8, 12b für die Reihe 9 und nicht dargestellt 12c und 12d für die Reihen 10 bzw. 11, und dazwischenliegenden, hier nur ausschnittsweise dargestellten Sammler- bzw. Weicheisenelementen 13. Im Axialschnitt sind hier stellvertretend die Sammler- bzw. Weicheisenelemente 13c für die Reihe 10 und 13d für die Reihe 11 dargestellt. Stirnseitig ist, d.h. auf der von der zentralen Trägerscheibe 3 wegweisenden Stirnseite 14 für die Polstruktur 2a und 15 für die Polstruktur 2b jeweils ein Endring 16 bzw. 17 zugeordnet. Erfindungsgemäß erfolgt die Lagefixierung zwischen den einzelnen Sammler- bzw. Weicheisenelementen 13 und den Permanent-Magnetanordnungen 12, insbesondere 12a und 12b bzw. 12c und 12d, in Umfangsrichtung durch Form- und Stoffschluß, in axialer Richtung zwischen den Reihen 8 und 9 und der Zwischenlage 5 bzw. 10 und 11 und der Zwischenlage 6 sowie den entsprechenden Endringen 16 und 17 kraftschlüssig. Dabei ist es im Prinzip unerheblich, welcher Art der Formschluß in Umfangsrichtung ausgeführt ist. Bei der dargestellten beispielhaften Ausführung umfaßt jede Magnetanordnung 12 bzw. 12a und 12b im wesentlichen zwei Magnete - einen Innenmagnet 18a bzw. 18b und einen Außenmagneten 19a bzw. 19b bzw. für die Reihe 10 und 11 hier im einzelnen nicht dargestellt 19c und 19d. Die Innenmagnete 18a und 18b sind dabei in radialer Richtung auf einem kleineren Durchmesser bezogen auf die Rotationsachse R angeordnet wie die Außenmagnete 19a, 19b bzw. hier nicht dargestellt 19c und 19d. Die Fixierung der Magnete in Umfangsrichtung und radialer Richtung erfolgt dabei hauptsächlich durch Formschluß mit den den Magneten in Umfangsrichtung benachbarten Sammler- bzw.

Weicheisenelementen 13a, 13b bzw. 13c und 13d. Dies wird in der Figur 1b dargestellt, welche einen Schnitt I/I gemäß der Figur 1 in Form einer Ansicht auf die Reihe 9 in axialer Richtung wiedergibt. Jeder Magnetanordnung 12 bzw. im vorliegenden Fall 12a und 12b und hier nicht dargestellt 12c und 12d ist ein Verbindungselement 21 zugeordnet. Das Verbindungselement ist dabei in jeder Magnetanordnung 12a, 12b und hier nicht dargestellt 12c und 12d zwischen dem Innenmagneten 18a, 18b bzw. 18c und 18d und dem entsprechenden Außenmagneten 19a, 19b bzw. 19c und 19d angeordnet. Das formschlüssige Verbindungselement 21 ist vorzugsweise als eine aus amagnetischem Blech gestanzte Platte ausgeführt. Diese erstreckt sich in axialer Richtung vorzugsweise über die axiale Erstreckung der Magnetanordnung 12, im einzelnen 12a, 12b, 12c und 12d hinaus. Den so gebildeten Überhängen 22a, 23a bzw. 22b, 23b sind im wesentlichen dazu komplementäre Nuten 24a, 25a bzw. 24b, 25b in den den Reihen 8 und 9 bzw. 10 und 11 benachbarten Elementen zugeordnet. In Umfangsrichtung erstrecken sich die formschlüssigen Verbindungselemente 21 jeweils im wesentlichen über die in Umfangsrichtung erfolgende Ausdehnung der Permanentmagnete. Eine geringere Ausdehnung ist ebenfalls denkbar. Die Verbindungselemente einer jeder Magnetanordnung 12a, 12b, 12c und 12d werden zwischen dem Innen- und dem Außenmagneten 18a, 18b, 18c, 18d und 19a, 19b, 19c bzw. 19d in die dazu komplementäre Nuten 24a, 25a bzw. 24b, 25b, 24c, 25c und 24d, 25d an den benachbarten Elementen, beispielsweise für die Magnetanordnung 12a, die Nuten 24a im Endring 16 und 25a im Zwischenring 6 eingesteckt. Unter dem Einsatz der Fliehkraft wird dadurch ein Formschluß zwischen den einzelnen Sammler- bzw. Weicheisenelemente 13a, 13b und den Magneten 12a bzw. 12b in radialer Richtung hergestellt, da das formschlüssige Verbindungselement 21 die Lage der Magnetanordnung 12a, 12b bzw. 12c und 12d in radialer Richtung fixiert und zusätzlich die Magnetanordnungen 12a, 12b, 12c und 12d mit den Sammler- bzw. Weicheisenelementen 13a, 13b, 13c bzw. 13d in Umfangsrichtung eine formschlüssige Verbindung aufweisen bzw. in ihrem Verschiebeweg in radialer Richtung begrenzt werden.

Die Figur 1 b verdeutlicht eine Ansicht I/I aus Figur 1a auf die Reihe 9. Daraus wird ersichtlich, daß die Sammler- bzw. Weicheisenelemente 13b der Reihe 9 die Innen- und Außenmagnete 18b und 19b der Magnetanordnung 12b in radiale Richtung fixieren. Die Sammler- bzw. Weicheisenelemente 13b bilden dabei einen ersten in radialer Richtung innenliegenden Anschlag 26b für den Innenmagneten 18a sowie einen in radialer Richtung außenliegenden Anschlag 27b für den Außenmagneten 19b. Durch das zusätzliche Vorsehen des formschlüssigen Verbindungselementes 21 b wird im Zusammenwirken mit den aus nicht leitendem Material bestehenden Elementen Zwischenring 5 und Endring 16 sowie Zwischenring 5 und axialer Trägerscheibe 3 ein Formschluß in radialer Richtung hergestellt. Zur Realisierung einer möglichst einfachen Montage und der Gewährleistung einer trotzdem erforderlichen hohen Festigkeit und der Fliehkraft exakten Lagefixierung zwischen den Permanent-Magnetanordnungen 12a, 12b, 12c bzw. 12d, den Weicheisenelementen 13a, 13b, 13c, 13d und den entsprechende Anschlußelementen in axialer Richtung wie Zwischenring 5 bzw. 6 und Endring 16 bzw. 17 sowie Trägerscheibe 3 sind die zur Realisierung des Formschlusses erforderlichen miteinander in Wirkverbindung tretenden Elemente hinsichtlich der Toleranzen derart ausgeführt, daß im montiertem Zustand ein Fügespalt 30 von einigen Zehntel Millimetern in radialer und/oder axialer Richtung zwischen Magnetanordnung 12 und den benachbarten Weicheisenelementen 13 einkonstruiert wird. Um während des Betriebes Relativbewegungen innerhalb der Polstrukturen 2a und 2b, insbesondere der einzelnen Elemente der Polstrukturen zueinander zu vermeiden, welche zu einer Beschädigung einer Isolation zwischen der Magnetanordnungen 12a, 12b, 12c bzw. 12d und den Sammler- bzw. Weicheisenelementen 13a, 13b, 13c bzw. 13d führen können, wird der vormontierte Rotor 1 erfindungsgemäß mit Tränkharz, umfassend ein Alkydharz oder ein Phenolharz oder ein Esterimid getränkt. Die Befüllung mit Tränkharz erfolgt im Rahmen des Herstellungsverfahrens in einem Arbeitsgang. Dabei werden den Permanent-Magnetanordnungen 12a, 12b, 12c und 12d gegenüber den Sammler- bzw. Weicheisenelementen 13a, 13b, 13c und 13d sowie den Anschlußelementen wie beispielsweise Endring 16 bzw. 17, zwischen Lage 5 bzw. 6 und Trägerscheibe 3 in radialer und axialer Richtung fixiert. Die Tränkung erfolgt dabei derart vollständig, daß wenigstens jeweils der Fügespalt 30 zwischen den Permanent-Magnetanordnungen 12a, 12b, 12c und 12d sowie den Sammler- bzw. Weicheisenelementen 13a, 13b, 13c und 13d und den axialen Anschlußelementen vollständig gefüllt wird und zusätzlich die Magnetanordnungen 12a, 12b, 12c und 12d sowie die Anschlußelemente in Umfangsrichtung teilweise mit dem Tränkharz überzogen werden.

Insbesondere bei Ausführung der Permanentmagneten als Neodynm-Eisen-Bor-Magnete ist diese Lösung besonders vorteilhaft, da das Tränkharz neben der Möglichkeit der Lagefixierung auch einen Korrosionsschutz für die Permanent-Magnetanordnungen 12a, 12b, 12c und 12d bietet. Auf einen zusätzlichen Korrosionsschutz kann verzichtet werden, weshalb auch andere preiswertere Magnetanordnungen zum Einsatz gelangen können.

Die erfindungsgemäße Lösung für Ausführungen mit radialem Formschluß zwischen Permanentmagneten und Anschlußbaueelementen bei Fliehkraftwirkung bietet neben der Lagefixierung der Permanentmagneten durch die Anordnung der Aussparungen und damit auch die Lage der Weicheisenelemente den Vorteil, daß neben der Festigkeitserhöhung gleichzeitig als Zusatzfunktion ein einfach realisierbarer Korrosionsschutz geschaffen wird, welcher nicht zusätzlich zu eventuell vorzusehenden Mitteln zur Lagefixierung vorgesehen werden muß. Die Funktion des Korrosionsschutzes wird von den Mitteln zur Erhöhung der Festigkeit realisiert. Zur axialen Lagefixierung sind die Polstrukturen mittels Befestigungselementen 31 an der Trägerscheibe 3 fixiert. Diese erstrecken sich dabei vom jeweiligen Endring 16, 17 durch die Polstrukturen 2a bzw. 2b.

Eine weitere Ausführung eines Rotors 1.2 ist in der Figur 2 in einem Ausschnitt entsprechend einer Schnittdarstellung gemäß Figur 1b wiedergegeben. Bei dieser sind zusätzlich in Umfangsrichtung ausgerichtete Zentrierhilfen 28.b vorgesehen. Diese sind dabei vorzugsweise an den Weicheisenelementen 13b in Form von Vorsprüngen 29b ausgebildet.

Die erfindungsgemäße Lösung ist nicht auf eine Ausführung in den Figuren 1 und 2 beschränkt. Diese ist bei jeder Rotorausführung für Synchronmaschinen mit transversaler Flußführung einsetzbar, welche durch Form- und Kraftschluß zusammengehalten wird und bei welchen keinerlei Vergußmasse oder Klebemasse eingesetzt wird. Diese Funktion wird erfindungsgemäß vom verwendeten Tränkharz übernommen, welcher neben der Realisierung eines Stoffschlusses zwischen den einzelnen Elementen der Polstruktur und damit der Lagefixierung sowie Übertragung von Kräften gleichzeitig dem aktiven Korrosionsschutz dient. Die Tränkung erfolgt dabei durch Einbringen von Tränkharz in die Fügespalte.

Unter einem weiteren Aspekt der Erfindung kann der Korrosionsschutz durch Verwendung einer Kühlung aufgrund eines Kühlmittel-Luftgemisches erhöht werden. In diesem Fall wird die Synchronmaschine mit transversaler Flußführung teilweise mit einem Kühlmittel in Form von niederviskosen Öl gefüllt, wobei der Kühlmittelsumpf derart ausgebildet ist, daß der Rotor 1 entweder vollständig oder zumindest teilweise in diesen eintaucht. Durch die Bewegung des Rotors bei Rotation wird dabei Kühlmittel aus dem Kühlmittelsumpf mitgerissen und am Umfang des Rotors zerstäubt. Aufgrund der Rotorstruktur, insbesondere den unterschiedlichen radial äußeren Abmessungen zwischen den Weicheisenelementen 13a, 13b, 13c und 13d und dem Permanent-Magnetanordnungen 12a, 12b, 12c und 12d wird kein vollständiger Strahl durch die Rotorrotation erzeugt, sondern die stufige Struktur bedingt ein sehr schnelles Zerstäuben des mitgerissenen Kühlmittels und der im Gehäuse der Synchronmaschine befindlichen Luft, so daß ein entsprechender Ölnebel gebildet wird, welcher durch Wärmeströmung und Wärmeübergang den Wärmetransport vom Rotor zu einem beispielsweise flüssigkeitsgekühlten Stator übernimmt. Das Kühlmittel-Luftgemisch übernimmt dabei im wesentlichen nur den Wärmetransport, weshalb keine zusätzlichen Einrichtungen zur Kühlung des Kühlmittels, insbesondere des Öls vorgesehen werden müssen und eine einmalige Teilbefüllung mit Kühlmittel, welche im Inneren der Synchronmaschine mit transversaler Flußführung verbleibt, ausreicht. Die Verwendung von niederviskosem Öl als Kühlmittel bietet dabei zusätzlich die Möglichkeit einer einfachen Schaffung eines Korrosionsschutzes für den Rotor 1.

### Bezugszeichenliste

- 1, 1.2: Rotor
- 2, 2a, 2b: Polstruktur
- 3: Trägerscheibe
- 4a, 4b: Stirnfläche
- 5: Zwischenelement
- 6: Zwischenelement
- 8: Reihe von in Umfangsrichtung wechselweise magnetisierten Permanent-Magnetanordnungen mit dazwischenliegenden Weicheisenelementen
- 9: Reihe von in Umfangsrichtung wechselweise magnetisierten Permanent-Magnetanordnungen mit dazwischenliegenden Weicheisenelementen
- 10: Reihe von in Umfangsrichtung wechselweise magnetisierten Permanent-Magnetanordnungen mit dazwischenliegenden Weicheisenelementen
- 11: Reihe von in Umfangsrichtung wechselweise magnetisierten Permanent-Magnetanordnungen mit dazwischenliegenden Weicheisenelementen
- 12, 12a, 12b 12c, 12d: Permanent-Magnetanordnungen
- 13, 13a, 13b 13c, 13d: Sammler- bzw. Weicheisenelemente
- 14: Stirnseite
- 15: Stirnseite
- 16: Endring
- 17: Endring
- 18a, 18b, 18c, 18d: Innenmagnete
- 19a, 19b, 19c, 19d: Außenmagnete
- 20 21a, 21b, 21c, 21d: Verbindungselement
- 22a, 22b, 22c, 22d: Überhänge
- 23a, 23b, 23c, 23d: Überhänge
- 24a, 24b, 24c, 24d: Nuten
- 25a, 25b, 25c, 25d: Nuten
- 26: Anschlag
- 27: Anschlag
- 28b: Zentrierhilfen
- 29b: Vorsprünge
- 30: Fügespalt
- 31: Befestigungselement
- R: Rotationsachse

## Patentansprüche

1. Rotor (1; 1.2) für eine Synchronmaschine mit transversaler Flußführung, insbesondere einer Transversalflußmaschine
1.1 mit einer Trägerscheibe (3);
1.2 mit wenigstens einer, von der Trägerscheibe (3) in axialer Richtung sich weg erstreckenden Polstruktur (2, 2a, 2b), umfassend wenigstens zwei nebeneinanderliegende, durch eine Zwischenlage (5, 6) aus magnetisch und elektrisch nicht leitendem Material getrennte Reihen (8, 9) aus in Umfangsrichtung wechselweise magnetisierten Magnetanordnungen (10, 11) mit dazwischenliegenden Sammler- beziehungsweise Weicheisenelementen (13, 13a, 13b, 13c, 13d);
1.3 die Magnetanordnungen (12, 12a, 12b, 12c, 12d) sind kraft- und/oder formschlüssig in radialer, axialer und Umfangsrichtung mit den in dieser Richtung benachbarten Elemente verbunden;
1.4 im montierten Zustand sind zwischen den Magnetanordnungen (12, 12a, 12b, 12c, 12d) und den benachbarten Elementen in axialer, radialer und Umfangsrichtung jeweils ein Fügespalt geringer Größe vorgesehen, welcher sich wenigstens über einen Teil der Erstreckung der Magnetanordnung in dieser Richtung erstreckt;
1.6 die Fügespalte sind mit Tränkharz gefüllt.

2. Rotor (1; 1.2) nach Anspruch 1, **dadurch gekennzeichnet, daß** das Tränkharz ein Harz auf der Basis von Alkydharz ist.

3. Rotor (1; 1.2) nach Anspruch 1, **dadurch gekennzeichnet, daß** das Tränkharz ein Harz auf der Basis von Phenolharz ist.

4. Rotor (1; 1.2) nach Anspruch 1, **dadurch gekennzeichnet, daß** das Tränkharz als Harzbasis ein Esterimid aufweist.

5. Rotor (1; 1.2) nach einem der Ansprüche 1 bis 4, **gekennzeichnet durch** folgendes Merkmal:
die einzelnen Reihen (8, 9) von in Umfangsrichtung wechselweise magnetisierten Permanent-Magnetanordnungen (12, 12a, 12b, 12c, 12d) mit dazwischenliegenden Weicheisenelementen (13, 13a, 13b, 13c, 13d) und die dazwischenliegenden Zwischenlagen (5, 6) und die Trägerscheibe (3) sind kraftschlüssig miteinander gekoppelt.

6. Rotor (1; 1.2) nach einem der Ansprüche 1 bis 5, **gekennzeichnet durch** die folgenden Merkmale:
6.1 die einer Magnetanordnung in Umfangsrichtung benachbarten Sammlerbeziehungsweise Weicheisenelemente (13, 13a, 13b, 13c, 13d) sind derart gestaltet, daß diese einen ersten innenliegenden Anschlag und einen zweiten außenliegenden Anschlag für die Magnetanordnung (12, 12a, 12b, 12c, 12d) in radialer Richtung bilden;
6.2 die Reihen (8, 9) aus in Umfangsrichtung wechselweise magnetisierten Magnetanordnungen (12, 12a, 12b, 12c, 12d) mit dazwischenliegenden Sammler- beziehungsweise Weicheisenelementen (13, 13a, 13b, 13c, 13d) sind in Umfangsrichtung in bestimmten Abständen in axialer Richtung beidseitig überstehende Elemente (21a, 21b, 21c, 21d) zugeordnet;
6.3 die überstehenden Elemente (21a, 21b, 21c, 21d) sind in dazu komplementäre Nuten (24a, 24b, 24c, 24d, 25a, 25b, 25c, 25d) an den den getrennten Reihen (8, 9) aus in Umfangsrichtung wechselweise magnetisierten Magnetanordnungen (12, 12a, 12b, 12c, 12d) mit dazwischenliegenden Sammler- beziehungsweise Weicheisenelementen (13, 13a, 13b, 13c, 13d) benachbarten Ringen (8, 9), Zwischenring (5, 6) und Trägerscheibe (3) einsteckbar.

7. Rotor nach Anspruch 6, **gekennzeichnet durch** die folgenden Merkmale:
7.1 die überstehenden Elemente (21a, 21b, 21c, 21d) sind einer Vielzahl von Magnetanordnungen (12a, 12b, 12c, 12d) zugeordnet;
7.2 eine Vielzahl der Magnetanordnungen (12a, 12b, 12c, 12d) weist einen Innen- (18a, 18b, 18c, 18d) und einen Außenmagneten (19a, 19b, 19c, 19d) auf;
7.3 das überstehende Element (21a, 21b, 21c, 21d) ist als Zwischenelement aus amagnetischen Material ausgeführt;
7.4 das Zwischenelement (21a, 21b, 21c, 21d) ist zwischen dem Innen- (18a, 18b, 18c, 18d) und dem Außenmagneten (19a, 19b, 19c, 19d) in radialer Richtung angeordnet und erstreckt sich in axialer Richtung über deren Ausdehnung hinaus.

8. Rotor nach Anspruch 7, **dadurch gekennzeichnet, daß** jeder Magnetanordnung (12a, 12b, 12c, 12d) ein Zwischenelement (21a, 21b, 21c, 21d) zugeordnet ist.

9. Rotor nach einem der Ansprüche 6 bis 8, **dadurch gekennzeichnet, daß** in Umfangsrichtung auf einem bestimmten Durchmesser zur Realisierung einer axialen Verspannung der Polstruktur (2, 2a, 2b) mit der Trägerscheibe (3) Befestigungselemente vorgesehen sind.

10. Rotor nach Anspruch 9, **dadurch gekennzeichnet, daß** die Befestigungselemente auf einem Durchmesser angeordnet sind, der sich innerhalb der radialen Erstreckung der Innenmagnete (18a, 18b, 18c, 18d) der Magnetanordnungen (12a, 12b, 12c, 12d) befindet, wobei die Magnetanordnungen (12a, 12b, 12c, 12d) in deren Bereich die Befestigungselemente vorgesehen sind, frei von Innenmagneten (18a, 18b, 18c, 18d) ausgeführt sind.

11. Rotor nach einem der Ansprüche 1 bis 10, **dadurch gekennzeichnet, daß** die Sammler- beziehungsweise Weicheisenelemente (13a, 13b, 13c, 13d) mit den Magnetanordnungen (12a, 12b, 12c, 12d) und/oder die Magnetanordnungen (12a, 12b, 12c, 12d) mit den benachbarten Ringen - Zwischenring (5, 6), Endring beziehungsweise zentrale Trägerscheibe (3) - zusätzlich formschlüssig verbunden sind.

12. Rotor nach Anspruch 11, **dadurch gekennzeichnet, daß** das Zwischenelement (21a, 21b, 21c, 21d) sich über wenigstens einen Teil der Erstreckung der Magnetanordnung (12a, 12b, 12c, 12d) in Umfangsrichtung erstreckt.

13. Rotor (1; 1.2) nach einem der Ansprüche 6 bis 12, **dadurch gekennzeichnet, daß** das Zwischenelement (21a, 21b, 21c, 21d) als Platte ausgeführt ist.

14. Verfahren zur Herstellung eines Rotors (1; 1.2) für eine Synchronmaschine mit transversaler Flußführung, umfassend eine Trägerscheibe (3), eine mit der Trägerscheibe (3) verbundene und sich in axialer Richtung von dieser weg erstreckende Polstruktur (2, 2a, 2b), umfassend wenigstens zwei Reihen (8, 9) von in Umfangsrichtung wechselweise magnetisierten Magnetanordnungen mit dazwischenliegenden Sammler- beziehungsweise Weicheisenelementen, wobei die Magnetanordnungen (12a, 12b, 12c, 12d) in Umfangsrichtung mit den benachbarten Sammler- beziehungsweise Weicheisenelementen form- und/oder kraftschlüssig verbunden sind und die Polstruktur (2a, 2b) in axialer Richtung mit der Trägerscheibe (3) verspannt ist;
**gekennzeichnet durch** die folgenden Merkmale:
14.1 die einzelnen Sammler- beziehungsweise Weicheisenelemente werden derart gefertigt, daß im montierten Zustand in Umfangsrichtung betrachtet zwischen den einzelnen Magnetanordnungen und den benachbarten Sammler- beziehungsweise Weicheisenelementen und in radialer Richtung und/oder axialer Richtung ein Fügespalt geringer Größe bestehen bleibt;
14.2 die einzelnen Reihen von in Umfangsrichtung wechselweise magnetisierten Magnetanordnungen (12a, 12b, 12c, 12d) und dazwischenliegenden Sammler- beziehungsweise Weicheisenelementen (13a, 13b, 13c, 13d) werden in axialer Richtung gegenüber der Trägerscheibe (3) verspannt;
14.3 die vormontierte Rotorstruktur wird in einem Tränkharz getränkt.

15. Verfahren nach Anspruch 14, **dadurch gekennzeichnet, daß** in einem Verfahrensschritt alle Magnetanordnungen getränkt werden.
